# EUROPÄISCHE PATENTSCHRIFT

(11) **EP 2 430 797 B1**
(45) Veröffentlichungstag und Bekanntmachung des Hinweises auf die Patenterteilung: **18.10.2017**
(21) Anmeldenummer: 10720012.3
(22) Anmeldetag: 11.05.2010
(51) Int. Cl.: H04L 12/40, G06F 13/12, H04L 29/08, H04W 84/18, H01Q 1/32, G08G 1/00, H04M 11/04, H04W 4/04

(54) **STEUERGERÄT FÜR FAHRZEUGE IN DER BIDIREKTIONALEN ADHOC-NETZWERK-FUNKKOMMUNIKATION**
CONTROL DEVICE FOR VEHICLES IN BIDIRECTIONAL AD HOC NETWORK RADIO COMMUNICATION
DISPOSITIF DE COMMANDE POUR DES VÉHICULES EN COMMUNICATION RADIO BIDIRECTIONNELLE PAR RÉSEAU AD HOC

(30) Priorität: 11.05.2009 DE 102009003010; 29.05.2009 DE 102009026578
(43) Veröffentlichungstag der Anmeldung: 21.03.2012
(73) Patentinhaber: Continental Teves AG & Co. oHG, 60488 Frankfurt (DE); Continental Automotive GmbH, 30165 Hannover (DE)
(72) Erfinder: STÄHLIN, Ulrich, 65670 Eschborn (DE); ECKERT, Alfred, 55129 Mainz-Hechtsheim (DE); DIEBOLD, Jürgen, Eschborn 65760 (DE); LÜKE, Stefan, 65843 Sulzbach (DE); WINDL, Helmut, 93077 Bad Abbach (DE)
(74) Vertreter: Waldmann, Georg Alexander
(86) Internationale Anmeldenummer: PCT/EP2010/056467
(87) Internationale Veröffentlichungsnummer: WO 2010/130741

(56) Entgegenhaltungen:
- WO-A1-2007/097689
- WO-A1-2009/030522
- DE-A1- 10 344 008
- US-A1- 2002 143 969

## Beschreibung

Die Erfindung betrifft ein Steuergerät zur Datenverarbeitung in der bidirektionalen Adhoc-Netzwerk-Funkkommunikation im Rahmen der Fahrzeug-zu-Fahrzeug (C2C) oder der Fahrzeug-zu-Umgebung (C2X)-Kommunikation gemäß dem Oberbegriff des Anspruchs 1, welche die C2C-Kommunikation als Sonderfall mit einschließt. Das Steuergerät weist in üblicher Weise eine Recheneinheit zur Datenverarbeitung und Anschlüsse zur Dateneingabe- und Datenausgabe auf.

Derartige Steuergeräte finden in der Praxis Einsatz, um Daten in der bidirektionalen Adhoc-Netzwerk-Funkkommunikation zu empfangen und auszuwerten bzw. aufzubereiten und auszusenden. In der WO 2009/074655 A1 ist in diesem Zusammenhang eine zentrale Steuereinheit bekannt, die die Rechenleistung für eine Vielzahl von angeschlossenen Sensoren und Anwendungen zur Verfügung stellt. An diese Steuereinheit sind auch mit Antennen versehene Kommunikationseinheiten angeschlossen, die zur Teilnahme an verschiedenen Datennetzen eingerichtet sein können. Es besteht jedoch der Nachteil, dass die Steuereinheit hochintegriert ausgebildet ist und eine sehr hohe Rechenleistung aufweisen muss. Außerdem sind die gesamte Bordelektronik und das Kommunikationssystem bei Ausfall der zentralen Steuereinheit gestört.

Ein ähnlicher Aufbau eines Kommunikationssystems ist aus der WO 2009/030522 bekannt, bei der eine Kommunikationseinheit mit Antenne jeweils mit einer zentralen Recheneinheit des Fahrzeugs verbunden ist, die als zentrale Recheneinheit des Fahrzeugs arbeitet. Die Kommunikationseinheit ist zur Fahrzeug-zu-Fahrzeug bzw. Fahrzeug-zu-Umgebung-Kommunikation eingerichtet. Die zentrale Recheneinheit verwendet die aus der Fahrzeug-zu-Fahrzeug bzw. Fahrzeug-zu-Umgebung-Kommunikation erhaltenen Daten, um sie mit Positionsdaten bspw. eines Satellitenpositionierungssystems oder sonstiger Fahrzeugsensoren zu vergleichen und in dem Fahrzeug geführte Karten durch Abgleich dieser erhaltenen Daten zu aktualisieren. Dabei werden auch Positionswerte der Kommunikationspartner in der Fahrzeug-zu-Fahrzeug-Kommunikation herangezogen.

In diesem Zusammenhang sind aus der WO 2009/133185 A1 auch eine selbstlernende Karte bzw. eine Vorrichtung zum Erstellen und Speichern einer derartigen digitalen Karte bekannt, die auf Basis von Umfeldsensoren, Fahrzeug-zu-Umgebung-Kommunikation und Satellitennavigationssystemen erstellt wird, ohne dass hierfür Navigationskartendaten verwendet werden müssen. Die digitale Karte wird iterativ verbessert und kann zur Validitätsprüfung einer bereits existierenden digitalen Karte für ein Fahrerassistenzsystem verwendet werden. Auch in diesem Fall ist eine zentrale Recheneinheit mit Anschluss an die verschiedenen Sensoren vorgesehen.

Auch die WO 2007/097689 A1 offenbart ein Kraftfahrzeug-Steuergerät nach dem Oberbegriff des Anspruchs 1, das in der bidirektionalen Adhoc-Netzwerk-Funkkommunikation verwendet wird. Die Steuereinheit weist einen Prozessor zur Datenverarbeitung und Anschlüsse zur Dateneingabe und Datenausgabe aus, bspw. an einen Telephon- oder WLAN-Übertragungseinheit, eine GPS-Einheit oder Sensoren auf. Grundsätzlich kann ein Fachmann die WLAN-Verbindung nach dem ITS-Standard mit dem entsprechenden Kommunikationsprotokoll realisieren.

Problematisch bei diesen zentralen Recheneinheiten ist der hohe Bedarf an Rechenleistung, der den Einsatz aufwendiger Prozessoren erfordert. Diese Recheneinheiten sind daher vergleichsweise teuer. Dies führt in der Praxis dazu, dass sich viele Autokäufer gegen den Einsatz derartig hochwertiger Kommunikationssysteme entscheiden. Daher ist es wünschenswert, Systeme zu schaffen, die bei Bedarf die erforderliche Rechenleistung zur Verfügung stellen und entsprechend in Fahrzeugen nachgerüstet werden können.

Die DE 103 44 008 A1 beschreibt ein Verfahren und eine Vorrichtung zur Steuerung von Betriebsabläufen in einem Kraftfahrzeug mit einem Steuergerät zur Datenverarbeitung, das einen ersten Prozessor enthält, der zur Steuerung von ersten Funktionen von Betriebsabläufen des Fahrzeugs verwendet wird. Ergänzend ist wenigstens ein zweiter Prozessor einer fahrzeugexternen, portablen technischen Einheit als Coprozessor vorgesehen, der mit dem Steuergerät verbunden werden kann und zusätzlich zu dem ersten Prozessor zur Steuerung von zweiten Funktionen von Betriebsabläufen des Fahrzeugs einsetzbar ist. Die portable technische Einheit kann bspw. ein PDA, Organizer oder Laptop sein. Die ersten Funktionen können sicherheitskritische oder echtzeitkritische Funktionen sein, die zweiten Funktionen dagegen laufzeit- und/oder rechenzeitintensive Funktionen. Ferner ist es möglich, Prioritäten zu vergeben und den zweiten Prozessor nur für Funktionen einer bestimmten Prioritätsgruppe zu verwenden. Hierdurch wird erreicht, dass den steigenden Funktionsanforderungen zum einen Rechnung getragen werden kann und zum anderen die Kosten für Prozessoren in den Steuergeräten begrenzt werden.

Aus der US 2002/0143969 A1 ist ferner ein System zur Unterstützung verschiedener Netzwerkprotokolle bekannt, bei dem die Abarbeitung verschiedener Layer des Netzwerkprotokolls auf unterschiedliche Prozessoren verteilt ist. Die hardwarenahen Protokollschichten, d.h. die physikalische Schicht (physical Layer) und die Verbindungsschicht (link layer), die üblicherweise durch eine spezielle Hardware gebildet werden, sind hier durch eine Softwarelösung ersetzt, die in einem Steuerspeicher vorgesehen ist, um den zweiten Prozessor entsprechend anzusteuern. Bei einer Änderung des Protokolls werden durch den ersten Prozessor die entsprechenden Änderungen der Software zur Ansteuerung des zweiten Prozessors in dem Steuerspeicher implementiert. Dann kann der zweite Prozessor eine Kommunikation nach dem neuen Protokoll abarbeiten, ohne dass eine Hardwareanpassung vorgenommen werden muss.

Aufgabe der Erfindung ist es, ein Steuergerät zur Datenverarbeitung in der bidirektionalen Adhoc-Netzwerk-Funkkommunikation vorzusehen, das die Skalierbarkeit der Systeme und die Auswertung zusammengehöriger Informationen auf kostengünstige Weise verbessert.

Diese Aufgabe wird erfindungsgemäß mit einem Steuergerät entsprechend den Merkmalen des Anspruchs 1 gelöst. Dazu ist bei dem Steuergerät, dessen Recheneinheit dazu eingerichtet ist, Daten nach dem ITS-Standard zu verarbeiten, erfindungsgemäß vorgesehen, die Datenverarbeitung nach dem ITS-Standard auf eine inhaltliche Auswertung und/oder Aufbereitung der mittels der bidirektionalen Adhoc-Netzwerk-Funkkommunikation insbesondere mittels DSRC und/oder ITS-G5 empfangenen oder zu sendenden Daten beschränkt ist. Erfindungsgemäß soll keine mit der Durchführung der eigentlichen Kommunikation, d.h. der Anmeldung in dem Netzwerk und dem Senden bzw. Empfangen der Daten, im Rahmen der mit der bidirektionalen Adhoc-Netzwerk-Funkkommunikation verbundenen Aufgaben durchgeführt werden.

Diese Aufgaben sind einer außerhalb dieses erfindungsgemäßen Steuergeräts vorgesehenen ITS-Kommunikationseinheit vorbehalten. Um einen zuverlässigen und schnellen Datenaustausch mit dieser ITS-Kommunikationseinheit zu ermöglichen, weist das erfindungsgemäße Steuergerät dazu einen breitbandigen ersten Kommunikationsanschluss, bspw. USB, Ethernet, MOST-Datenbus, Flexray, CAN oder dergleichen, zumindest für das Empfangen von Daten von einer ITS-Kommunikationseinheit zur bidirektionalen Adhoc-Netzwerk-Funkkommunikation auf. Diese ITS-Kommunikationseinheit kann bspw. in eine intelligente Antenne integriert sein, welche als zentrale Fahrzeugeinheit zur Umsetzung der Funkkommunikation in dem Fahrzeug vorhanden ist und eine Antenne zur bidirektionalen Adhoc-Netzwerk-Funkkommunikation mittels DSRC (Dedicated Short Range Communication) bzw. ITS-G5, eine Antenne für die Satelliten-Funkkommunikation, insbesondere zum Empfangen von Satellitenpositionssignalen, sowie evtl. eine Antenne für die zelluläre Funkkommunikation in einem öffentlichen Mobilfunknetz aufweist. Das erfindungsgemäße Steuergerät ist dann mittels des breitbandigen Kommunikationsanschlusses mit dieser intelligenten Antenne und der darin vorgesehenen ITS-Kommunikationseinheit verbunden.

Im Rahmen des ITS-Standards weist die ITS-Kommunikationseinheit insbesondere die zur Umsetzung der Funkkommunikation notwendigen Module ITS-Access, ITS-Network und ITS-Transport auf, welche vorzugsweise unmittelbar den Aufbau eines bidirektionalen Adhoc-Netzwerks mittels Funkkommunikation mit anderen Teilnehmern organisieren und den Datenaustausch durchführen. Diese ITS-Module im Rahmen der DSRC- bzw. ITS-G5 Kommunikation können vorzugsweise in einem einzigen Prozessor realisiert sein. Das erfindungsgemäße Steuergerät zur Verarbeitung der Daten in der bidirektionalen Adhoc-Netzwerk-Funkkommunikation führt dabei insbesondere vorverarbeitende Schritte im Sinne des PreProcessing aus. Ferner ist der ITS-Facilities-Layer mit Anwendungen und der ITS-Applikations-Layer in die Steuereinheit gemäß der vorliegenden Erfindung integriert, um fahrzeug- und sicherheitsrelevante Daten zu verarbeiten. Das Verarbeiten schließt sowohl das Auswerten der im Rahmen der bidirektionalen Adhoc-Netzwerk-Funkkommunikation empfangenen Daten als auch das Vorbereiten von Daten zur Aussendung mittels dieser bidirektionalen Adhoc-Netzwerk-Funkkommunikation ein.

Dies sind die anwendungsorientierten Daten, so dass der ITS-Facilities bzw. ITS-Applications-Layer die oberste Schicht des ITS-Standards darstellt, welche die Schnittstelle des ITS-Systems zum Fahrzeug ermöglicht und Daten zur Verfügung stellt, die durch andere Fahrzeugeinrichtungen, insbesondere Fahrerassistenzsysteme und sonstige sicherheitsrelevante Eirichtungen, genutzt werden können. Die ITS-Kommunikationseinheit umfasst dagegen insbesondere die Aufbereitung der Daten für die eigentliche Übertragung bzw. Kommunikation, d.h. das Senden und Empfangen der Daten. Dies ist im Rahmen der ITS-Konfiguration üblicherweise in niedrigeren Schichten des ITS-Protokolls realisiert. Diese Kommunikationsaufgaben sollen erfindungsgemäß also gerade nicht mit der Recheneinheit des Steuergeräts zur Datenverarbeitung durchgeführt werden. Das erfindungsgemäße Steuergerät wird nachfolgend auch als ITS-Sensor bezeichnet. Den genauen Aufbau des Protokolls gemäß dem ITS-Standard kann dem Internet unter "www .standards.its.com.gov" entnommen werden.

Die ITS-Kommunikationseinheit ist daher vorzugsweise mit in einer Antenneneinheit integriert oder dieser noch einmal vorgeschaltet, so dass die Antenneneinheit insbesondere mit der Antenne zur bidirektionalen Adhoc-Netzwerk-Funkkommunikation über die ITS-Kommunikationseinheit mit dem ITS-Sensor und den in seiner Recheneinheit integrierten ITS-Komponenten verbunden ist.

Es ist natürlich möglich, diesen breitbandigen Kommunikationsanschluss parallel neben dem Empfangen von Daten von einer ITS-Kommunikationseinheit auch zum Übertragen von Daten zu der ITS-Kommunikationseinheit zu verwenden, welche diese Daten dann in das bidirektionale Adhoc-Netzwerk mittels Funkkommunikation aussendet. Hierdurch wird jedoch ein Teil der Bandbreite auch für das Übertragen der Daten benötigt, so dass das Empfangen von Daten über diesen breitbandigen Kommunikationsanschluss unter Umständen zeitlich verzögert wird. Daher kann erfindungsgemäß ein zweiter Kommunikationsanschluss für das Senden von Daten zu der ITS-Kommunikationseinheit zur bidirektionalen Adhoc-Netzwerk-Funkkommunikation vorgesehen sein. Diese ITS-Kommunikationseinheit sorgt dann für die Aussendung der Daten in das Adhoc-Netzwerk, d.h. an die temporär im Empfangsbereich liegenden Teilnehmer des Kommunikationsnetzwerks. Diese Trennung der Kommunikationsanschlüsse für das Senden und das Empfangen ist besonders vorteilhaft, da in der Regel große Datenmengen empfangen und möglichst schnell verarbeitet werden sollen. Dies ist durch den erfindungsgemäß breitbandigen Anschluss möglich. Die zu sendenden Daten sind in der Regel wesentlich weniger umfangreich, so dass ein zweiter Kommunikationsanschluss vorgesehen werden kann, der als ein einfaches Fahrzeugkommunikationsnetz, bspw. ein Bus mit Flexray, ein CAN-Bus oder dergleichen ausgebildet sein kann.

Ergänzend kann erfindungsgemäß ein Satellitendaten-Anschluss zum Empfangen von Positionsdaten eines satellitenbasierten Ortungssystems vorgesehen sein. Diese Positionsdaten können natürlich als digitalisierte Daten zur Verfügung gestellt werden, welche dann ggf. auch über den erfindungsgemäß vorgesehenen breitbandigen ersten Kommunikationsanschluss übertragen werden könnten. In diesem Fall werden die Satelliten-Rohdaten von einem gesonderten Satelliten-Empfänger mit einer eigenen Satelliten-Recheneinheit für das Auswerten der Satelliten-Rohsignale empfangen.

Größere Flexibilität erhält man jedoch, wenn der Satellitendaten-Anschluss des erfindungsgemäßen Steuergeräts zum Empfang von Satelliten-Rohdaten vorgesehen und bspw. über ein Antennenkabel direkt mit der Antenneneinrichtung zum Empfangen der Satelliten-Funkdaten verbunden ist. In diesem Fall weist das Steuergerät eine Recheneinheit bzw. einen Prozessor für die Auswertung der Satelliten-Rohdaten auf, die mit in die Recheneinheit des Steuergeräts integriert oder als separater Chip ausgebildet sein kann. Letzteres ist vorteilhaft, da die Chips zur Satellitendaten-Auswertung zwischenzeitlich in großer Stückzahl und preisgünstig zur Verfügung stehen.

Ferner weist das Steuergerät gemäß einer bevorzugten Ausführungsform erfindungsgemäß auch mindestens einen Anschluss für einen Fahrsensor zur Erfassung dynamischer Fahrzeugdaten und/oder einen Umfeldsensor zur Erfassung des Fahrzeugumfelds auf, so dass ein oder mehrere dieser Sensoren mit in das Steuergerät integriert sind und die Recheneinheit des Steuergeräts zur Ansteuerung dieser Sensoren mit eingerichtet ist. Auch die empfangenen Sensordaten werden dann erfindungsgemäß in dem Steuergerät mit ausgewertet, so dass dieses Steuergerät im Sinne eines ITS-Sensors als zentrale Sicherheitssteuereinheit bzw. -einrichtung des Fahrzeugs dienen kann, in der sämtliche die Fahrzeugsicherheit betreffenden Daten zusammengeführt und ausgewertet werden.

In diesem Zusammenhang kann das erfindungsgemäße Steuergerät bzw. dessen Recheneinheit auch dazu eingerichtet sein, Satelliten-Positionsdaten und Daten eines Fahrzeug-und/oder Umfeldsensors zu kombinieren. Hierdurch lassen sich verbesserte Fahrdynamikzustände und eine verbesserte Positionierung des Fahrzeugs erreichen. Besonders flexibel und schnell lässt sich diese Kombination von Satelliten-Positionsdaten und Daten sonstiger Fahrzeug- oder Umfeldsensoren bei Verwendung von Satelliten-Rohdaten erreichen, da diese besonders schnell verfügbar sind und die Auswertung zielgerichtet erfolgt, um die benötigten Informationen aus den Satelliten-Signalen zu extrahieren.

Ein besonderer Vorteil der Integration des ITS-Facilities-Layer im Rahmen der DSRC- bzw. ITS-G5 Kommunikation in ein separates Steuergerät liegt auch darin, dass dieses Steuergerät mit seiner integrierten Recheneinheit erfindungsgemäß nach einem hohen bzw. höheren SIL-Level (Safety Integrity Level) eingerichtet sein kann und daher eine hohe Sicherheitsstufe aufweist. Diese ist notwendig, um durch das erfindungsgemäße Steuergerät (ITS-Sensor) sicherheitsrelevante Funktionen im Rahmen von Fahrerassistenzsystemen zu übernehmen, die automatische Bremsungen oder sonstige Fahreingriffe vornehmen, um die Verkehrssicherheit zu erhöhen. Ein derartig hoher SIL-Level lässt sich bei Kommunikationsanwendungen, insbesondere bei der bidirektionalen Adhoc-Netzwerk-Funkkommunikation nicht erreichen, da diese Systeme häufig auf zufälligen Entwicklungen basieren und ein hohes Maß an Funktionssicherheit nicht gewährleisten können.

Um die Ergebnisse der Datenverarbeitung des erfindungsgemäßen Steuergeräts auch dem Fahrer des eigenen Fahrzeugs darstellen zu können und ihm die Möglichkeit zur Einflussnahme auf die Datenverarbeitung zu geben, kann in dem Steuergerät ferner ein Anschluss an eine Multimediaeinheit vorgesehen sein, die im Rahmen des üblichen Fahrzeug-Kommunikationsnetzes realisiert sein kann.

In diesem Zusammenhang kann die Recheneinheit des erfindungsgemäßen Steuergeräts dazu eingerichtet sein, von einer Multimediaeinheit, von einem Fahrzeugsensor, von einem Umfeldsensor und/oder durch ein bidirektionales Adhoc-Netzwerk empfangene Daten zusammenzuführen und daraus vorverarbeitete Daten nach dem ITS-Standard zu erzeugen, die an eine ITS-Kommunikationseinheit sendbar sind, welche diese dann in das bidirektionalen Adhoc-Netzwerk mittels Funkkommunikation aussendet, um anderen Verkehrsteilnehmern diese Informationen zur Verfügung zu stellen. Dabei kann es sich um sicherheitsrelevante Informationen handeln. Diese Informationen können allerdings auch einfach der Information oder einer intelligenten Verkehrsleitführung dienen. Erfindungsgemäß kann die Recheneinheit auch dazu eingerichtet sein, eine Vorverarbeitung außerhalb des ITS-Standards, d.h. eine proprietäre Vorverarbeitung, der Kommunikationsdaten durchzuführen.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: den schematischen Aufbau eines erfindungsgemäßen Steuergeräts in einem Fahrzeug-Kommunikationsnetz und
- Fig. 2: schematisch einen Ablaufplan für die erfindungsgemäße Vorverarbeitung von Daten nach dem ITS-Standard in dem ITS-Facilities-Layer unter Ausnutzung diverser in dem Steuergerät zusammenlaufender Informationen.

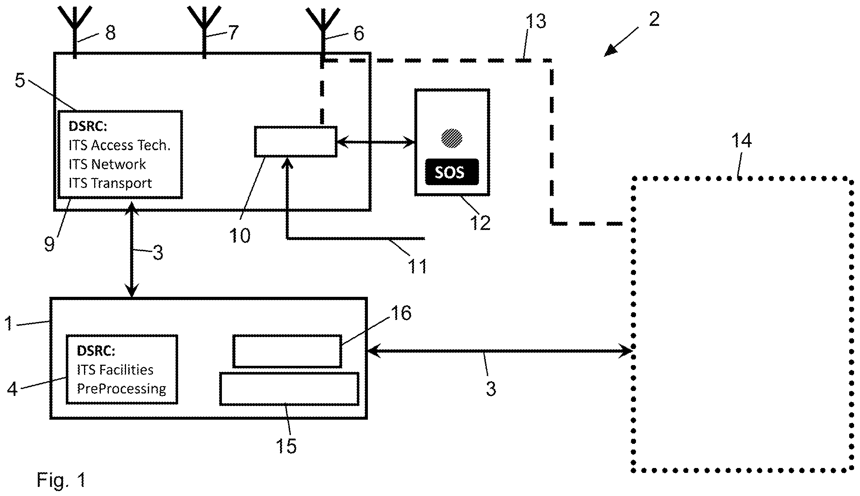

In Fig. 1 ist ein erfindungsgemäßes Steuergerät 1 zur Datenverarbeitung in der bidirektionalen Adhoc-Netzwerk-Funkkommunikation dargestellt, welches in ein Fahrzeug-Kommunikationsnetz 2 eingebunden ist.

Das Steuergerät 1 weist eine in Fig. 1 nicht gesondert dargestellte Recheneinheit zur Datenverarbeitung sowie Anschlüsse 3 zur Dateneingabe und Datenausgabe auf. Die Anschlüsse 3 sind in Fig. 1 schematisch als logische Verbindung dargestellt und nicht auf jeweils genau einen Anschluss begrenzt. Vielmehr kann der als Sammelanschluss dargestellte Kommunikationsanschluss 3 verschiedene Anschlüsse, auch technisch verschiedene Anschlüsse für unterschiedliche Aufgaben, beinhalten.

Die Recheneinheit des Steuergeräts 1 ist unter anderem dazu eingerichtet, Daten nach dem ITS-Standard zu verarbeiten, wobei die Datenverarbeitung nach dem ITS-Standard auf eine inhaltliche Auswertung und/oder Aufbereitung der mittels der bidirektionalen Adhoc-Netzwerk-Funkkommunikation, insbesondere mittels DSRC bzw. ITS-G5, empfangenen oder zu sendenden Daten beschränkt ist. Dies ist durch einen Teil 4 der ITS-DSRC-Komponenten dargestellt, die insbesondere die Verarbeitungsschritte des ITS-Facilities-Layers sowie eine Datenvorverarbeitung (ITS-Facilities and PreProcessing) umfassen, wobei der ITS-Facilities-Layer auch die ITS-Applikationen des ITS-Applications-Layer mit umfassen kann. Nähere Informationen hierzu finden sich im Internet unter "http://www.standards.its.com.gov". Dort ist die Standardisierung des ITS-Standards (Intelligent Transportation System) im Überblick dargestellt.

Um tatsächlich an einer bidirektionalen Adhoc-Netzwerk-Funkkommunikation teilnehmen zu können, ist das Steuergerät 1 mit einer intelligenten Antenneneinrichtung 5 verbunden, welche eine Antenne für ein zelluläre Funkkommunikation 6, eine Antenne für eine Satelliten-Funkkommunikation 7 und eine Antenne für eine bidirektionalen Adhoc-Netzwerk-Funkkommunikation 8 aufweist. Sofern verschiedene Kommunikationsdaten in einer Antenne zusammengefasst werden können, ist es nicht notwendig, dass die intelligente Antenneneinrichtung 5 drei gesonderte Antennen 5, 6, 7 aufweist. Diese Antennen 6 bis 8 können dann auch in einer oder zwei Antennen zusammengefasst sein.

Die intelligente Antenneneinrichtung 5 ist mit Treiberelementen zur Durchführung der jeweiligen Kommunikationsarten sowie mit einer Recheneinheit ausgestattet. In dem dargestellten Beispiel ist in der Recheneinheit der intelligenten Antenneneinrichtung 5 eine weitere ITS-DSRC- bzw. ITS-G5 Komponente 9 integriert, die eine ITS-Kommunikationseinheit bildet, welche die technische Umsetzung der eigentlichen Kommunikation nach dem DSRC- bzw. ITS-G5-Standard, d.h. die Einbindung in das Netzwerk und das Senden bzw. Empfangen der Daten, übernimmt.

In die intelligente Antenneneinrichtung 5 ist ferner eine Notrufeinheit 10 integriert, die vorzugsweise eine Mobilfunkeinheit beinhaltet und im Falle eines schweren Unfalls einen Notruf über das zelluläre Mobilfunknetz aussendet. Dazu empfängt die Notrufeinheit 10 ein Airbag-Auslösesignal 11 und/oder ein Auslösesignal einer Mensch-Maschine-Schnittstelle 12, in der der Fahrer eines Fahrzeugs manuell einen Notruf absetzen kann. Entsprechend ist die Notrufeinheit 10 über ein gestrichelt dargestelltes Antennenkabel 13 mit der Antenne 6 für die zelluläre Funkkommunikation verbunden.

Das erfindungsgemäße Steuergerät 1 und die Antenne 6 für die zelluläre Funkkommunikation sind jeweils über einen Anschluss 3 bzw. ein Antennenkabel 13 mit weiteren Fahrzeugkomponenten verbunden, zu denen insbesondere eine Multimediaeinheit des Fahrzeugs mit einer Mensch-Maschine-Schnittstelle gehören kann. Diese weiteren Fahrzeugeinheiten sind pauschal mit dem Bezugszeichen 14 versehen und können insbesondere auch mehrere, untereinander mittels eines Fahrzeug-Kommunikationsnetzes verbundene Fahrzeugeinheiten aufweisen.

Aufgrund dieser vorgeschlagenen Struktur innerhalb des Fahrzeug-Kommunikationsnetzes 2 wird erreicht, dass der ITS-Facility-Layer in einem eigenen Steuergerät 1 untergebracht wird, so dass das Steuergerät 1 insbesondere zur Auswertung von sicherheitsrelevanten Daten herangezogen werden kann. Dieses Steuergerät 1 weist daher vorzugsweise auch Anschlüsse 15 für Fahrzeugsensoren zur Erfassung der Fahrzeugdynamik und/oder Umfeldsensoren zur Erfassung der Fahrzeugumgebung auf, deren Daten in der Recheneinheit des Steuergeräts 1 mitverarbeitet werden. Ferner kann die Steuereinheit 1 über die Anschlüsse 3 an die Antenne 7 für Satelliten-Funkkommunikation angeschlossen sein, welche insbesondere Satelliten-Rohdaten an eine Positionierungseinheit 16 des Steuergerätes 1 überträgt. Diese Rohdaten können auch bereits digitalisiert sein, d.h. an der Antenne 7 ist bereits ein Transceiver mit einfacher Verarbeitungseinheit angeschlossen.

Damit stehen dem auch als ITS-Sensor bezeichneten, eine separate Einheit bildenden Steuergerät 1 sämtliche Informationen und Daten aus der bidirektionalen Adhoc-Netzwerk-Funkkommunikation und der Satelliten-Funkkommunikation sowie aus den fahrzeugeigenen Sensoren zur Verfügung, um alle sicherheitsrelevanten Applikationen des Fahrzeugs zu steuern und mit Daten zu versorgen. Daher ist das Steuergerät 1 vorzugsweise mit einem hohen SIL-Level, d.h. einer hohen Sicherheitsstufe, realisiert, insbesondere mit einem höheren SIL-Level als die intelligente Antenneneinrichtung mit der ITS-Kommunikationseinheit und den zur Kommunikation notwendigen Komponenten ITS-Access, ITS-Network und ITS-Transport, für die sich eine derart hohe Ausfallsicherheit in der Regel nicht erreichen lässt.

Die Fahrdynamiksensoren, welche an die Anschlüsse 15 für die Fahrzeugsensoren des Steuergeräts 1 angeschlossen sind, messen insbesondere Raddrehzahlen, Gierrate, Querbeschleunigung, Lenkradwinkel und dergleichen. Die Daten dieser Fahrdynamiksensoren können mit den GPS-Rohdaten eines Satelliten-Ortungssystems verwendet werden, um eine verbesserte Positionierung sowie verbesserte Fahrdynamikzustände (Geschwindigkeit, Gierrate, Schwimmwinkel und dergleichen) zu erstellen. An seinem Ausgang 3 stellt der ITS-Sensor 1 diese Daten für die bidirektionale Adhoc-Netzwerk-Funkkommunikation (C2C, C2X-Funkkommunikation) in entsprechend vorverarbeiteter Form zur Verfügung, die über einen Anschluss 3 an die ITS-Kommunikationseinheit 9 und/oder weitere Fahrzeugeinheiten 14 übertragen werden. Hierfür kann ein Datenbus im Rahmen des Fahrzeug-Kommunikationsnetzes 2 eingesetzt werden. Zusätzlich stellt der ITS-Sensor auch Fahrdynamikdaten des an die Anschlüsse 15 angeschlossenen Sensorclusters bereit, die um Daten aus der Positionierungseinheit 16 ergänzt werden können. Möglichkeiten hierzu sind in der WO 2009/133185 A1 und der WO 2009/030522 A1 beschrieben.

Ein besonderer Vorteil der vorgeschlagenen Architektur ergibt sich aus der Trennung zwischen weniger sicherheitsrelevanter Kommunikation in der intelligenten Antenneneinrichtung 5 und sicherheitskritischer Datenvorverarbeitung in dem Steuergerät 1 und den in der Recheneinheit des Steuergeräts 1 realisierten ITS-DSRC- bzw. ITS-G5-Komponenten 4. Damit ist es auch möglich, sich ändernde Teile der Architektur, wie bspw. eine Antenne inklusive der ITS-Kommunikationseinheit 9, ein ADAS-Steuergerät oder ein Multimediasteuergerät im Sinne weiterer Fahrzeugeinheiten 14 zu tauschen, ohne dass der ITS-Sensor mit der sicherheitsrelevanten Datenvorverarbeitung verändert werden muss. Hierdurch wird die Skalierbarkeit verbessert, da weitere Endgeräte je nach gewünschter Fahrzeugausstattung flexibel verändert werden können, ohne dass die nur schwer nachrüstbaren Komponenten, welche in dem Steuergerät 1 integriert sind, verändert werden müssen.

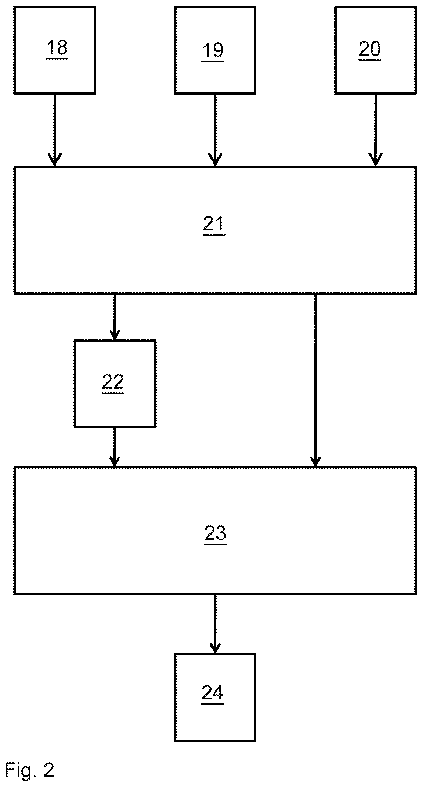

Nachfolgend wird eine mögliche Anwendung des in Fig. 1 dargestellten Systems und der erfindungsgemäßen Steuereinheit 1 anhand von Fig. 2 näher erläutert.

In der Recheneinheit des Steuergeräts 1 laufen über eine Fahrzeug-zu-Fahrzeug-Kommunikation 18, über Daten von Fahrzeug-Umfeldsensoren 19 und über Satelliten-Ortungsdaten 20 Informationen über einen Stau an der jetzigen Fahrzeugposition oder auf der gewählten Fahrzeugroute ein.

Nach derzeitigem Stand der Technik werden derartige Staumeldungen typischerweise mit Hilfe von Detektorschleifen in der Straße oder Kameraüberwachung von einer Zentrale erkannt und dann über verschiedene Kommunikationskanäle, wie bspw. TMC, Radiomeldungen, dynamische Anzeigen auf Schilderbrücken oder dergleichen an die Fahrer der Fahrzeuge weitergegeben. Mittels einer Fahrzeug-zu-Fahrzeug-Kommunikation ist es zusätzlich möglich, dass Fahrzeuge selbst aufgrund der Information über die Anzahl und Geschwindigkeit der Fahrzeuge sowie evtl. weiterer Informationen von den Fahrzeug-Umfeldsensoren einen Stau in ihrer Umgebung erkennen und weitersenden.

Der Grund für den Stau ist bei all diesen Methoden jedoch nur in Ausnahmefällen ermittelbar, weil hierfür in der Regel weitere Informationen von der Polizei, von Rettungskräften oder sonstigen mit der Verkehrsüberwachung beschäftigen Personen, notwendig sind. Seit einiger Zeit gibt es zusätzlich sogenannte Staumelder, die ihre Beobachtungen mittels eines Anrufs bei Radiostationen oder bei Automobilclubs melden. Hierbei geben die Staumelder auch den Grund für den Stau an, sofern dieser bekannt ist.

Durch das erfindungsgemäß in ein Fahrzeug-Kommunikationsnetz 2 eingebundenes Steuergerät 1 ist es möglich, die Vorteile der Staumelder mit der automatischen Erkennung von Staus durch eine Fahrzeug-zu-Fahrzeug-Kommunikation zu kumulieren und die Zuverlässigkeit der Daten zu erhöhen.

Fährt bspw. ein Fahrer mit seinem Kraftfahrzeug in einen Stau ein, so kann dieser den Stau mittels eines Tastendrucks oder einer anderen Mensch-Maschine-Schnittstelle im Rahmen einer Multimediasteuereinheit an umliegende Fahrzeuge senden. Es ist auch möglich, dass das Fahrzeug aufgrund von Umfeldsensoren den Stau selbst erkennt. Entsprechend wird beim Verlassen des Staus dessen Ende im Rahmen der Fahrzeug-zu-Fahrzeug-Kommunikation an andere Verkehrsteilnehmer ausgesendet. Diese empfangenen Informationen können dann in den umliegenden Fahrzeugen die automatische Erkennung stützen bzw. deren Erkennungswahrscheinlichkeit erhöhen.

Dies wird in jedem Fahrzeug durch die Recheneinheit des Steuergeräts 1 im Rahmen einer Stauerkennung 21 ausgeführt. Die Stauerkennung 21 des Steuergeräts 1 ist vorzugsweise auch dazu eingerichtet, den Grund für den Stau mit an die im Rahmen der Fahrzeug-zu-Fahrzeug-Kommunikation auszusendenden Informationen anzuhängen. Sofern diese Information der Stauerkennung 21 nicht vorliegt, kann sie eine Anfrage an eine Mensch-Maschine-Schnittstelle 22 senden und den Grund für die Entstehung des Staus abfragen. Die Eingabe kann durch eine Tasteneingabe, aber auch in Form einer Sprachmemo oder durch Mitsenden eines Bildes oder Videos erfolgen, falls eine Kamera in das Fahrzeug integriert ist. Es besteht auch die Möglichkeit, dass die Recheneinheit 1 mittels einer Medienkonvertierung z.B. das Sprachmemo des Fahrers in eine textuelle Botschaft überführt, die einfacher und mit geringerem Datenaufwand übertragen werden kann. Weitere Möglichkeiten für Botschaften sind z.B. aus einem Satz von vorgegebenen Staugründen ausgewählte Symbole, die dann mittels eines standardisierten Codes übertragen werden. Dies kann dann in einer Stauverarbeitung 23 erfolgen.

Ferner kann die Recheneinheit des Steuergeräts 1 in der Mensch-Maschine-Schnittstelle 22 bei Empfang einer entsprechenden Staunachricht auffordern, die Existenz des Staus und den Grund für den Stau zu bestätigen oder zu verneinen. Sofern der Fahrer optional auf diese Aufforderung reagiert, kann diese an die anderen Fahrzeuge versendet werden, was zu einer immer größeren Verlässlichkeit der Information führt.

Bei der Übertragung dieser zusätzlichen Information muss darauf geachtet werden, dass der Kommunikationskanal nicht überlastet wird. Da sich in einem Stau typischerweise sehr viele Fahrzeuge befinden und damit der Kommunikationskanal sehr stark ausgelastet ist, bietet es sich an, diese Zusatzinformationen möglichst knapp bspw. als standardisierten Code oder Textnachricht zu übertragen, so dass die Stauverarbeitung typischerweise dazu eingerichtet ist, eine Sprach- und/oder Videonachricht durch eine Medienkonvertierung in eine Textnachricht zu überführen.

Sollten dennoch vom Datenvolumen her größere Informationen übertragen werden, bietet es sich an, einen Verweis bzw. Link auf die größeren Informationen zu verschicken, die dann auf einem anderen Kommunikationskanal, bspw. einem WLAN, abgerufen werden können. Mittels der in ihrer Datenkapazität beschränkten bidirektionalen Adhoc-Netzwerk-Funkkommunikation werden nur die Zugangsdaten für den WLAN und/oder den Abrufort übertragen. Es bietet sich also an, eine direkte Versendung der textuellen Nachricht mit einem Link auf die gesprochene Nachricht zu übersenden, die dann von anderen Fahrzeugen jederzeit abgerufen werden kann.

Nach der Stauverarbeitung 23 erfolgt durch das Steuergerät 1 eine Aussendung der Stauinformationen 24 im Rahmen der Fahrzeug-zu-Fahrzeug-Kommunikation, die außer von Fahrzeugen natürlich auch durch sogenannte Road Side Units (RSU) im Rahmen einer Fahrzeug-zu-X-Kommunikation aufgefangen werden und von dort durch eine Zentrale weiterverarbeitet werden können. Es ist sinnvoll, derartige Road Side Units im Rahmen der Fahrzeug-zu-Umgebung-Kommunikation an neuralgischen Staupunkten aufzustellen.

In dem erfindungsgemäßen Steuergeräts 1 findet die zentrale Auswertung der von verschiedenen Informationsquellen (Kommunikation, Sensoren, Eingabe des Menschen) erhaltenden Informationen also zentral in der Recheneinheit des Steuergeräts 1 statt, welches hierfür über Anschlüsse 3 des Fahrzeug-Kommunikationsnetzes auf andere Fahrzeugeinheiten zugreift. Die zentrale Verwaltung findet jedoch in dem Steuergerät 1 statt, das daher neben der vorgenannten Aufgabe im Rahmen der Stauerkennung auch gut für sicherheitsrelevante Aufgaben herangezogen werden kann.

Konkrete Beispiele für die Stauerkennung sollen nachfolgend kurz erläutert werden.

Ein Fahrer A gerät in einen Stau, der vorher schon mittels einer Fahrzeug-zu-Fahrzeug-Kommunikation automatisch durch das Steuergerät 1 detektiert wurde. Auf Rückfrage in der Mensch-Maschine-Schnittstelle 22 bestätigt er diesen Stau mittels eines Tastendrucks. Nach einiger Zeit erkennt er, dass der Stau aufgrund von Schaulustigen entstanden ist. Er drückt erneut eine Stautaste in seiner Mensch-Maschine-Schnittstelle 22 und wählt diesmal die Option, eine Begründung für den Stau mit zu übermitteln. Daraufhin spricht er die Begründung in sein Mikrofon. In der Stauverarbeitung 23 der Recheneinheit des Steuergeräts 1 wird diese Information mittels einer Medienkonvertierung in eine Textnachricht umgewandelt und mittels Fahrzeug-zu-Fahrzeug-Kommunikation als Staunachricht 24 ausgesendet. Zusätzlich wird ein Link auf das WLAN seines Fahrzeugs mitgeschickt, wo die originale Sprachnachricht zum Abruf vorgehalten wird. Diese kann durch Aufrufen des Links von Fahrern benachbarter Fahrzeuge im Sende- und Empfangsbereich des WLAN abgerufen werden. Einige Zeit später löst sich der Stau langsam auf und Fahrer A bestätigt das Auflösen des Staus durch einen erneuten Tastendruck. Im Rahmen des Steuergeräts 1 ist es dabei vorteilhaft, wenn den Staunachrichten 24 auch Positionierungsdaten 20 des eigenen Fahrzeugs hinzugefügt werden.

In einem weiteren Beispiel erhält Fahrer B die Botschaft über einen Stau, die von Fahrer C übermittelt wurde. Da Fahrer B jedoch keinen Stau erkennen kann, widerspricht der Fahrer B im Rahmen der Stauerkennung 21 in seiner Mensch-Maschine-Schnittstelle 22 der Staumeldung. Auch diese Information wird mittels Fahrzeug-zu-Fahrzeug-Kommunikation als Staunachricht 24 ausgesendet. Fahrer D erhält nun die Information, dass evtl. ein Stau vorhanden sein könnte, dieser aber nicht durch die automatische Stauerkennung bestätigt werden kann. Nach einiger Zeit melden noch weitere zusätzliche Fahrer, dass kein Stau vorliegt. Nach Empfang dieser zusätzlichen Daten kann die Stauerkennung 21 entscheiden, die Staumeldungen dem Fahrer gar nicht mehr in der Mensch-Maschine-Schnittstelle 22 anzuzeigen.

In einem weiteren Beispiel nähert sich Fahrzeug E einem Stau. Aufgrund der Bestätigung des Staus durch andere Fahrzeuge können der Anfang des Staus sehr genau erkannt werden und diese Information dem Fahrer im Rahmen der Stauerkennung 21 in der Mensch-Maschine-Schnittstelle 22 sehr genau angezeigt werden. Auch die Aktualisierungsgeschwindigkeit ist sehr hoch. Hierdurch kann sich der Fahrer sehr genau auf das Stauende einstellen, das immer einen hohen Gefährdungsgrad für schwere Auffahrunfälle bildet. Zusätzlich kann durch die Bestätigung des Stauendes durch andere Fahrzeuge auch die Länge und Dauer des Staus sehr genau vorhergesagt werden. Dies kann bspw. bei einer Umgehungskommunikation des Fahrzeugs berücksichtigt werden, die durch eine weitere Fahrzeugeinheit umgesetzt wird.

### Bezugszeichenliste:

- 1: Steuergerät zur Datenverarbeitung in der bidirektionalen Adhoc-Netzwerk-Funkkommunikation
- 2: Fahrzeug-Kommunikationsnetz
- 3: Kommunikationsanschlüsse
- 4: ITS-DSRC-Komponente
- 5: intelligente Antenneneinrichtung
- 6: Antenne für zelluläre Funkkommunikation
- 7: Antenne für Satelliten-Funkkommunikation
- 8: Antenne für bidirektionale Adhoc-Netzwerk-Funkkommunikation
- 9: ITS-DSRC-Komponente (ITS-Kommunikationseinheit)
- 10: Notrufeinheit
- 11: Airbag-Auslösesignal
- 12: Mensch-Maschine-Schnittstelle
- 13: Antennenverbindung
- 14: weitere Fahrzeugeinheiten
- 15: Anschlüsse für Fahrzeug- und Umfeldsensoren
- 16: Positionierungseinheit

- 18: Fahrzeug-zu-Fahrzeug-Kommunikation
- 19: Daten von Fahrzeug- und Umfeldsensoren
- 20: Positionierungsdaten
- 21: Stauerkennung
- 22: Mensch-Maschine-Schnittstelle
- 23: Stauverarbeitung
- 24: Aussendung der Staunachricht

## Patentansprüche

1. Steuergerät zur Datenverarbeitung in der bidirektionalen Adhoc-Netzwerk-Funkkommunikation im Rahmen der Fahrzeug-zu-Fahrzeug (C2C) oder der Fahrzeug-zu-Umgebung (C2X)-Kommunikation mit einer Recheneinheit zur Datenverarbeitung und Anschlüssen zur Dateneingabe- und Datenausgabe, welche dazu eingerichtet ist, die Daten nach dem ITS-Standard zu verarbeiten, **dadurch kennzeichnet, dass** die Datenverarbeitung auf Verarbeitungsschritte des ITS-Facility-Layers und des ITS-Applikation-Layers als oberste Schicht des ITS-Standards beschränkt ist, welche dazu ausgebildet ist, eine inhaltliche Auswertung und/oder Aufbereitung der mittels der bidirektionalen Adhoc-Netzwerk-Funkkommunikation empfangenen oder zu sendenden Daten vorzunehmen, fahrzeug- und sicherheitsrelevante Daten zu verarbeiten und durch Zur-Verfügung-Stellen von Daten, die durch andere Fahrzeugeinrichtungen genutzt werden, die Schnittstelle des ITS-Systems zum Fahrzeug zu ermöglichen und keine mit der Kommunikation im Sinne einer Anmeldung in dem Netzwerk und einem Senden bzw. Empfangen der Daten im Rahmen der mit der bidirektionalen Adhoc-Netzwerk-Funkkommunikation verbundenen Aufgaben durchzuführen, und dass ein erster breitbandiger Kommunikationsanschluss (3) zumindest für den Empfang der Daten von einer ITS-Kommunikationseinheit (9) zur bidirektionalen Adhoc-Netzwerk-Funkkommunikation vorgesehen ist.

2. Steuergerät nach Anspruch 1, **dadurch gekennzeichnet, dass** ein zweiter Kommunikationsanschluss (3) für das Senden von Daten zu der ITS-Kommunikationseinheit (9) vorgesehen ist.

3. Steuergerät nach Anspruch 1 oder 2, **dadurch gekennzeichnet, dass** ein Satellitendaten-Anschluss zum Empfang von Positionsdaten vorgesehen ist.

4. Steuergerät nach einem der vorhergehenden Ansprüchen, **dadurch gekennzeichnet, dass** mindestens ein Anschluss für einen Fahrzeug- und/oder Umfeldsensor (15) vorgesehen ist.

5. Steuergerät nach einem der vorhergehenden Ansprüche, **dadurch gekennzeichnet, dass** die Recheneinheit des Steuergeräts (1) dazu eingerichtet ist, Satelliten-Positionsdaten und Daten eines Fahrzeug- und/oder Umfeldsensors (15)zu kombinieren.

6. Steuergerät nach einem der vorhergehenden Ansprüche, **dadurch gekennzeichnet, dass** das Steuergerät (1) mit der Recheneinheit gemäß einer hohen Sicherheitsstufe gemäß dem SIL-Level, welche das Übernehmen sicherheitsrelevanter Funktionen von Fahrerassistenzsystemen zur Vornahme von Fahreingriffen erlaubt, eingerichtet ist.

7. Steuergerät nach einem der vorhergehenden Ansprüche, **dadurch gekennzeichnet, dass** ein Anschluss an eine Multimediasteuereinheit vorgesehen ist.

8. Steuergerät nach einem der vorhergehenden Ansprüche, **dadurch gekennzeichnet, dass** die Recheneinheit des Steuergeräts (1) dazu eingerichtet ist, von einer Multimediasteuereinheit, von einem Fahrzeug- und/oder Umfeldsensor (15) und/oder durch ein bidirektionales Adhoc-Netzwerk empfangene Daten zusammenzuführen und daraus vorverarbeitete Daten nach dem ITS-Standard zu erzeugen, die an eine ITS-Kommunikationseinheit sendbar sind, welche diese dann in das bidirektionale Adhoc-Netzwerk mittels Funkkommunikation aussendet, um anderen Verkehrsteilnehmern diese Informationen zur Verfügung zu stellen.

9. Steuergerät nach einem der vorhergehenden Ansprüche, **dadurch gekennzeichnet, dass** die Recheneinheit dazu eingerichtet ist, eine proprietäre Vorverarbeitung der Kommunikationsdaten durchzuführen, welche dann in das bidirektionale Adhoc-Netzwerk mittels Funkkommunikation ausgesendet werden, um anderen Verkehrsteilnehmern diese Informationen zur Verfügung zu stellen.

## Claims

1. Controller for data processing in bidirectional adhoc-network radio communication, in the course of vehicle-to-vehicle (C2C) or vehicle-to-surroundings (C2X) communication, with a computation unit for data processing and ports for data input and data output, which is set up to process the data according to the ITS standard, **characterized in that** the data processing is limited to processing steps of the ITS Facility layer and of the ITS Application layer as topmost layer in the ITS standard, which is configured to perform content-oriented evaluation and/or conditioning of the data which are received or need to be sent by means of the bidirectional adhoc-network radio communication, to process vehicle-relevant and safety-relevant data, and to enable the interface of the ITS system to the vehicle by providing data which are used by other vehicle devices, and not to perform any tasks linked to the communication in the context of an application in the network and a sending and receiving of the data, in the course of the with the bidirectional adhoc-network radio communication and **in that** a first wideband communication port (3) is provided at least for receiving the data from an ITS communication unit (9) for the purpose of bidirectional adhoc-network radio communication.

2. Controller according to Claim 1, **characterized in that** a second communication port (3) is provided for sending data to the ITS communication unit (9).

3. Controller according to Claim 1 or 2, **characterized in that** a satellite data port is provided for receiving position data.

4. Controller according to one of the preceding claims, **characterized in that** at least one port is provided for a vehicle sensor and/or ambient sensor (15).

5. Controller according to one of the preceding claims, **characterized in that** the computation unit of the controller (1) is set up to combine satellite position data and data from a vehicle sensor and/or ambient sensor (15).

6. Controller according to one of the preceding claims, **characterized in that** the controller (1) with the computation unit is set up on the basis of a high safety level according to the SIL level which allows safety-relevant functions of driver assistance systems to be adopted in order to carry out driving interventions.

7. Controller according to one of the preceding claims, **characterized in that** a port to a multimedia control unit is provided.

8. Controller according to one of the preceding claims, **characterized in that** the computation unit of the controller (1) is set up to merge data received from a multimedia control unit, from a vehicle sensor and/or ambient sensor (15) and/or by a bidirectional adhoc network and to produce preprocessed data therefrom according to the ITS standard, said data being able to be sent to an ITS communication unit which then transmits them to the bidirectional adhoc network by means of radio communication in order to make this information available to other road users.

9. Controller according to one of the preceding claims, **characterized in that** the computation unit is set up to perform proprietary preprocessing on the communication data which are then transmitted to the bidirectional adhoc network by means of radio communication in order to make this information available to other road users.

## Revendications

1. Appareil de commande pour le traitement de données lors de la communication radio bidirectionnelle par réseau ad hoc dans le cadre des communications de véhicule à véhicule (C2C) ou de véhicule à environnement (C2X), comportant une unité de calcul pour le traitement de données et des ports d'entrée de données et de sortie de données, qui est conçu pour traiter les données conformément à la norme ITS, **caractérisé en ce que** le traitement de données est limité à des étapes de traitement de la couche d'installation ITS (ITS Facility Layer) et de la couche d'application ITS (ITS Application Layer) en tant que couche supérieure de la norme ITS, configuré pour effectuer une évaluation du contenu et/ou un traitement des données reçues ou émises au moyen de la communication radio bidirectionnelle par réseau ad hoc, pour traiter des données de véhicule et de sécurité et pour permettre l'établissement de l'interface entre le système ITS et le véhicule par des points de mise à dispositif de donnée qui sont utilisées par d'autres dispositifs du véhicule, et pour n'effectuer aucune fonction liée à la communication au sens de l'envoi d'un message dans le réseau et de l'émission ou de la réception des données dans le cadre de la communication radio bidirectionnelle par réseau ad hoc, et **en ce qu'**il est prévu un premier port de communication à large bande (3) au moins pour la réception des données par une unité de communication ITS (9) pour la communication radio bidirectionnelle par réseau ad hoc.

2. Appareil de commande selon la revendication 1, **caractérisé en ce qu'**il est prévu un second port de communication (3) pour la transmission de données à l'unité de communication ITS (9).

3. Appareil de commande selon la revendication 1 ou 2, **caractérisé en ce qu'**il est prévu un port de données de positionnement par satellite destiné à recevoir des données de positionnement.

4. Appareil de commande selon l'une quelconque des revendications précédentes, **caractérisé en ce qu'**il est prévu un port destiné à un capteur de véhicule et/ou d'environnement (15).

5. Appareil de commande selon l'une quelconque des revendications précédentes, **caractérisé en ce que** l'unité de calcul de l'appareil de commande (1) est conçue pour combiner des données de positionnement par satellite et des données d'un capteur de véhicule et/ou d'environnement (15).

6. Appareil de commande selon l'une quelconque des revendications précédentes, **caractérisé en ce que** l'appareil de commande (1) est configuré au moyen de l'unité de calcul conformément à un étage de sécurité défini selon le niveau SIL, qui permet la prise en charge de fonctions liées à la sécurité par des systèmes d'assistance au conducteur destinés à effectuer des interventions de conduite.

7. Appareil de commande selon l'une quelconque des revendications précédentes, **caractérisé en ce qu'**il est prévu un port sur une unité de commande multimédia.

8. Appareil de commande selon l'une quelconque des revendications précédentes, **caractérisé en ce que** l'unité de calcul de l'appareil de commande (1) est conçue pour fusionner les données reçues par une unité de commande multimédia, par un capteur de véhicule et/ou d'environnement (15) et/ou par un réseau ad hoc pour générer à partir de celles-ci des données prétraitées conformément à la norme ITS, lesquelles données peuvent être envoyées à une unité de communication ITS qui les émet ensuite au moyen d'une communication radio dans le réseau ad hoc bidirectionnel afin de mettre lesdites informations à disposition d'autres usagers de la route.

9. Appareil de commande selon l'une quelconque des revendications précédentes, **caractérisé en ce que** l'unité de calcul est conçue pour effectuer un prétraitement propriétaire des données de communication qui sont ensuite émises dans le réseau ad hoc bidirectionnel au moyen d'une communication radio afin de mettre lesdites informations à disposition d'autres usagers de la route.
